# EUROPEAN PATENT SPECIFICATION

(11) **EP 4 035 191 B1**
(45) Date of publication and mention of the grant of the patent: **24.12.2025**
(21) Application number: 20868444.9
(22) Date of filing: 24.09.2020
(51) Int. Cl.: H01F 7/16, H02K 41/02, H02K 33/16, H02K 7/00, H02K 1/34, H01F 7/08

(54) **METHOD AND APPARATUS FOR SOLENOID TUBE**
VERFAHREN UND VORRICHTUNG FÜR EIN SOLENOIDROHR
PROCÉDÉ ET APPAREIL POUR TUBE À SOLÉNOÏDE

(30) Priority: 24.09.2019 US 201962905000 P
(43) Date of publication of application: 03.08.2022
(73) Proprietor: G.W. Lisk Company, Inc., Clifton Springs, New York 14432 (US)
(72) Inventor: GUTHRIE, Keith, Henrietta, NY 14467 (US); TYLER, Jeffery, Newark, NY 14467 (US); RUTHERFORD, Troy, Stanley, NY 14561 (US); KELLER, Riley, Stanley, NY 14561 (US)
(74) Representative: Flügel Preissner Schober Seidel
(86) International application number: PCT/US2020/052370
(87) International publication number: WO 2021/061893

(56) References cited:
- DE-A1- 102008 030 748
- DE-A1- 102013 211 816
- DE-A1- 2 236 586
- DE-B3- 102015 224 152
- US-A- 4 004 343
- US-A- 4 604 600
- US-A1- 2001 022 474
- US-A1- 2005 024 174
- US-A1- 2014 346 383
- US-A1- 2015 097 130
- US-A1- 2016 329 143

## Description

### BACKGROUND OF THE INVENTION

### FIELD OF THE INVENTION

The present disclosure relates to a solenoid assembly and more particularly to an improved solenoid tube.

### DESCRIPTION OF RELATED ART

A solenoid is a type of electromagnet. A typical solenoid can include a coil that is able to create magnetic fields. When a current is passed through the coil, a magnetic field is created in the space surrounding and within the coil. In some instances, the coil is wrapped around a ferromagnetic core such that it generates a magnetic field. Often a solenoid is used in a solenoid valve that is an integrated device having an electromechanical solenoid operable to actuate a valve.

DE 10 2013 211 816 A1 discloses an electromagnetic switching device and a method for manufacturing the electromagnetic switching device. For this purpose, a magnet armature and a push pin movable in a bearing along an axis are guided. A bearing sleeve accommodates at least the bearing and the magnet armature. According to an embodiment the electromagnet casing and the bearing sleeve are formed together as a one-piece component from a material and a conical pole core is formed on the bearing sleeve from the material of the electromagnet casing and the bearing sleeve, a yoke and an intermediate segment which separates pole core and yoke from each other, are inserted between bearing sleeve and electromagnet casing.

US 2014/0346383 A1 discloses a method for manufacturing a solenoid valve, including a sleeve, a valve needle situated inside the sleeve in a radial direction and guided so as to slide, a solenoid coil situated outside of the sleeve in a radial direction, a magnetic core situated inside the sleeve in a radial direction, and a magnet armature situated inside the sleeve in a radial direction, axially opposite to the magnetic core. The magnet armature is situated on the valve needle, the sleeve has a low wall thickness in a thin-walled region situated between the magnet armature and the solenoid coil, the thin-walled region strengthened by a reinforcing element for absorbing radial forces.

DE 10 2008 030 748 A1 discloses a linear solenoid arrangement, which comprises a bush-shaped pole tube body, which is divided axially into a pole section, a transition section and a tube section, and an armature, which is guided in the pole tube so as to be movable in the axial direction. The transition section has a smaller wall thickness than the tube section. In the area of the transition section, the pole tube body springs back radially on the outside so that a circumferential groove is formed. A support ring is provided in the circumferential groove.

US 2001/0022474 A1 discloses an electromagnetic driving device in which a housing portion receiving a movable element and an attracting portion attracting the movable element are integrally formed, a fluid control valve having the electromagnetic driving device and a method of manufacturing the electromagnetic driving device.

DE 22 365 86 A1 discloses a construction and a method of manufacturing a one-piece solenoid closing sleeve for actuating solenoids, in particular for use with solenoid valves.

US 2016/0329143 A1 discloses an electromagnetic drive device that includes a core that has a core body portion, a bobbin in which a tubular bobbin body portion is disposed over the entire region in the circumferential direction on the outer side of the core body portion in the radial direction, a coil wound around the outer peripheral surface of the bobbin body portion, a cover portion that covers the coil from the outer side in the radial direction over the entire region of the bobbin body portion in the axial direction and the circumferential direction, and a connector portion that houses a power feed terminal of the coil. The electromagnetic drive device controls the position of a sliding member in a housing space formed by the core body portion in the axial direction in accordance with the state of power feed to the coil.

DE 10 2015 224 152 B3 discloses an actuating device having a pole tube, an electric coil, a pot-like coil jacket and a pole disc. The coil jacket is held on the pole tube by means of a nut, the nut being provided with an O-ring which secures the nut against loosening.

### BRIEF SUMMARY OF THE INVENTION

In view of the foregoing, it is an object of the present disclosure to provide a method and apparatus for timing.

The invention is set out by the appended claims. A first exemplary embodiment of the present disclosure provides a solenoid assembly. The solenoid assembly includes a ferromagnetic core tube having a longitudinal axis, a radial exterior surface and a radial interior surface, the ferromagnetic core tube comprising a channel disposed on the radial exterior surface of the ferromagnetic core tube, the channel circumscribing the ferromagnetic core tube along a given portion of the longitudinal axis, the channel comprising a plurality of radial exterior surfaces, wherein a portion of the ferromagnetic core tube between the plurality of radial exterior surfaces of the channel and the radial interior surface of the ferromagnetic core tube define a thin wall portion of the ferromagnetic core tube. The solenoid assembly further comprising an excitation coil disposed radially outward of the ferromagnetic core tube, wherein the ferromagnetic core tube comprises a uniform single piece material, which is not according to the claimed invention.

The present invention according to claim 1 provides a solenoid assembly. The solenoid assembly includes a ferromagnetic core tube comprising radial exterior surface, a longitudinal axis, a first tube portion and a second tube portion, the first tube portion having a first radial exterior surface, the second tube portion having a second radial interior surface, the first radial exterior surface of the first tube portion being affixed to the second radial interior surface of the second tube portion, the ferromagnetic core tube comprising a channel disposed between first tube portion and the second tube portion on the radial exterior surface of the ferromagnetic core tube, the channel circumscribing the ferromagnetic core tube along a given portion of the longitudinal axis, the channel comprising a plurality of radial exterior surfaces. The solenoid assembly further includes an excitation coil disposed radially outward of the ferromagnetic core tube.

The present invention according to claim 7 is directed to a method of forming a solenoid assembly according to claim 1.

Another exemplary embodiment of the present disclosure provides a method including providing a ferromagnetic core tube having a longitudinal axis, a radial exterior surface and a radial interior surface, the ferromagnetic core tube comprising a channel disposed on the radial exterior surface of the ferromagnetic core tube, the channel circumscribing the ferromagnetic core tube along a given portion of the longitudinal axis, the channel comprising a plurality of radial exterior surfaces, wherein a portion of the ferromagnetic core tube between the plurality of radial exterior surfaces of the channel and the radial interior surface of the ferromagnetic core tube define a thin wall portion of the ferromagnetic core tube. The method further comprises providing an excitation coil disposed radially outward of the ferromagnetic core tube, wherein the ferromagnetic core tube comprises a uniform single piece material, which is not according to the claimed invention.

The following will describe embodiments of the present disclosure, but it should be appreciated that the present disclosure is not limited to the described embodiments and various modifications of the disclosure are possible without departing from the basic principle. The scope of the present disclosure is therefore to be determined solely by the appended claims.

### BRIEF DESCRIPTION OF THE SEVERAL VIEWS OF THE DRAWING(S)

FIG. 1 presents a cross-sectional view of an exemplary device suitable for use in practicing exemplary embodiments of this disclosure.
FIG. 2 presents a close up cross-sectional view of an alternative exemplary device suitable for use in practicing exemplary embodiments of this disclosure.
FIG. 3 presents a close-up cross-sectional view of an exemplary device suitable for use in practicing exemplary embodiments of this disclosure.
FIG. 4 presents a cross-sectional view of yet another alternative exemplary device suitable for use in practicing exemplary embodiments of this disclosure.
FIG. 5 presents a cross-sectional view of another alternative exemplary device suitable for use in practicing exemplary embodiments of this disclosure.
FIG. 6 presents a cross-sectional view of another alternative exemplary device suitable for use in practicing exemplary embodiments of this disclosure.
FIG. 7 presents a cross-sectional view of a further alternative exemplary device suitable for use in practicing exemplary embodiments of this disclosure.
FIG. 8 presents a perspective cross-sectional view of another alternative exemplary device suitable for use in practicing exemplary embodiments of this disclosure.
FIG. 9 presents a logic flow diagram in accordance with an exemplary method or process suitable for practicing exemplary embodiments of this disclosure.

### DETAILED DESCRIPTION OF THE INVENTION

Not claimed embodiments of the present disclosure provide a solenoid assembly having a uniform single piece ferromagnetic tube or core tube that is surrounded by an excitation coil, wound coil, or coil. Embodiments of the ferromagnetic tube include a uniform tube thickness along its longitudinal axis except for a channel circumscribing the radial exterior surface of the ferromagnetic tube. Embodiments include a ferromagnetic tube having a channel that utilizes a thinner cross section of the ferromagnetic tube material defining an air gap between the bottom of the channel and the radial exterior surface of the ferromagnetic tube. Embodiments of the present disclosure can be utilized when lower magnetic forces are required. Embodiments include the channel having a radial thickness that is less than the remainder of the ferromagnetic tube. Embodiments include a channel causing the core tube to have a radial thickness that can maintain its structural integrity when subjected to pressures from the internal forces of the core tube. In another embodiment, the channel does not define an air gap, but includes a channel filled with a non-ferromagnetic material such that the radial thickness between the radial interior surface of the ferromagnetic tube and the radial exterior surface of the ferromagnetic tube (including along the portion having the non-ferromagnetic material) is the same throughout the longitudinal axis. Embodiments of the non-ferromagnetic material include, but are not limited to brass, nickel, and injection molded plastics.

Embodiments of the present disclosure are operable to decrease leak failures due to porosity and/or poor fusion produced by cores tubes having multiple materials that are welded together or affixed to one another along the interior radial surface of the core tube. Embodiments are thus operable to reduce or eliminate potential hazardous failures during use. Embodiments allow for increases in manufacturing yields due to the elimination or reduction of pressure tight inspections and scrap due to unusable or leaky core tubes. Embodiments include increased core tube strength with the ability to perform in higher pressure applications than typical core tubes. Embodiments provide that various weld materials can be used since the weld materials will not come into contact with the material maintained within the core tube.

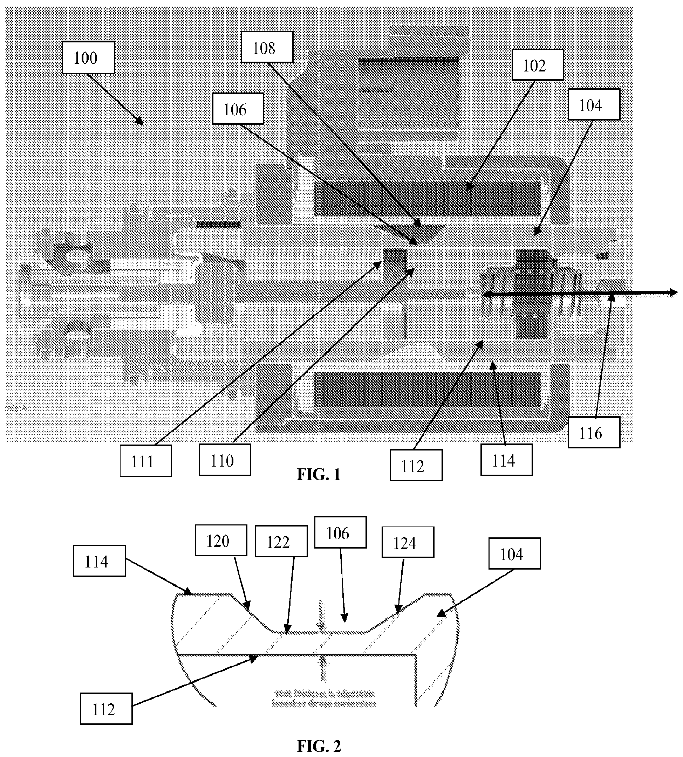

Referring to FIG. 1, shown is a cross-sectional view of an exemplary device or solenoid assembly suitable for use in performing exemplary embodiments not claimed but useful for understanding the invention. Shown in FIG. 1 is solenoid assembly 100 having a wound coil 102 (also referred to as an excitation coil or coil), a core tube 104, channel 106, weld material 108, and armature 110. The wound coil 102 is enclosed in a housing and disposed on a frame such that the wound coil 102 is radially outward from the core tube 104 and encompasses the core tube 104. The wound coil 102 is operable to have a current passed through it to create a magnetic flux. Some of the nonlimiting embodiments of would coil 102 include it being made of copper or aluminum insulated magnet wire. Movement direction is determined by the relationship with the groove, pole face and armature.

Embodiments of core tube 104 include a cylindrically shaped hollow tube having a radial interior surface 112 and a radial exterior surface 114. Embodiments of core tube 104 are made of a single uniform ferromagnetic material, which is not claimed. The term ferromagnetic includes ferrous materials and includes those materials having a high susceptibility to magnetization. The core tube 104 includes a longitudinal axis (indicated by line 116). Excluding channel 106, core tube 104 has a uniform thickness between its radial interior surface 112 and its radial exterior surface 114 throughout its longitudinal axis.

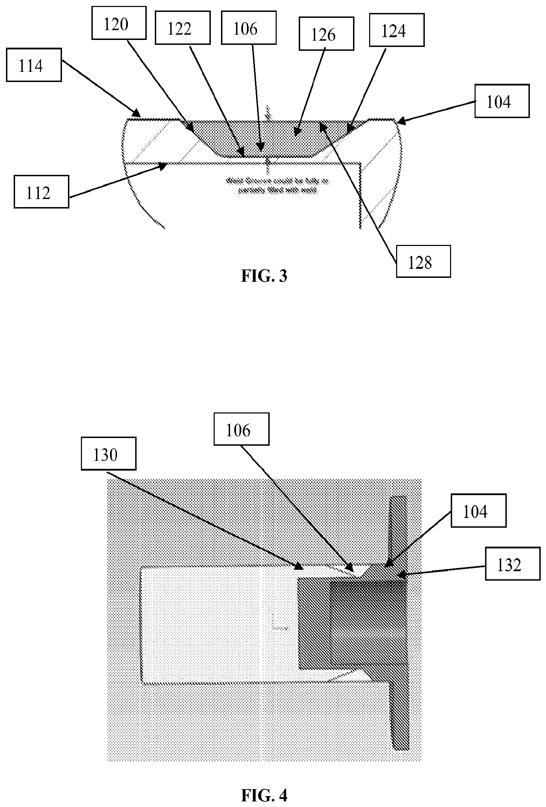

Channel 106 is defined by a groove located on the radial exterior surface 114 of core tube 104. Channel 106 circumscribes the radial exterior surface 114 of core tube 104 between a particular range along the longitudinal axis. In other words, channel 106 is formed such that any cross-sectional portion in the longitudinal direction of core tube 104 has a uniform thickness in the radial direction. Embodiments of channel 106 provide that the thickness along the channel 106 between the radial exterior surface and the radial interior surface 112 is 1/200 (0.005") to 1/20 (0.050") of an inch thick. It should be appreciated that channel 106 can include 2, 3 or more surfaces on the radial exterior surface. Referring to FIGs. 2 and 3, channel 106 includes radial exterior surfaces 120, 122, and 124. In the embodiment shown in FIG. 2, an air gap is defined by the area between the radial exterior surfaces 120, 122, and 124 of channel 106 and the radial exterior surface 114. Within the cavity of core tube 104, another gap is located comprising non-ferromagnetic material (e.g., air, fluid, oil, etc.) between pole face 111 and the armature (plunger) 110.

Referring to FIG. 3, shown is a close-up view of an alternative embodiment of the present disclosure. Depicted in FIG. 3 is core tube 104 having a radial interior surface 112, a radial exterior surface 114, and channel 106. In this embodiment, channel 106 does not define an air gap but includes a non-ferromagnetic filler material 126 (also referred to as a spacer). It should be appreciated that the non-ferromagnetic filler material is welded to the radial exterior surfaces of channel 106 (i.e., radial exterior surfaces 120, 122, 124). Embodiments of non-ferromagnetic filler material 126 can either completely or partially fill channel 106 such that the radial exterior surface 128 of non-ferromagnetic filler material 126 is coextensive with the radial exterior surface 114. In an alternative embodiment, channel 106 is completely void of any non-ferromagnetic filler material 126. In another embodiment, the radial exterior surface 128 of non-ferromagnetic filler material 126 is not coextensive such that the non-ferromagnetic filler material 126 extends further in the radial direction than the radial exterior surface 114 or does not extend in the radial direction as far as the radial exterior surface 114. As shown in FIG. 3, non-ferromagnetic filler material 126 is not coextensive with the radial exterior surface 114 and does not extend in the radial direction as far as the radial exterior surface 114.

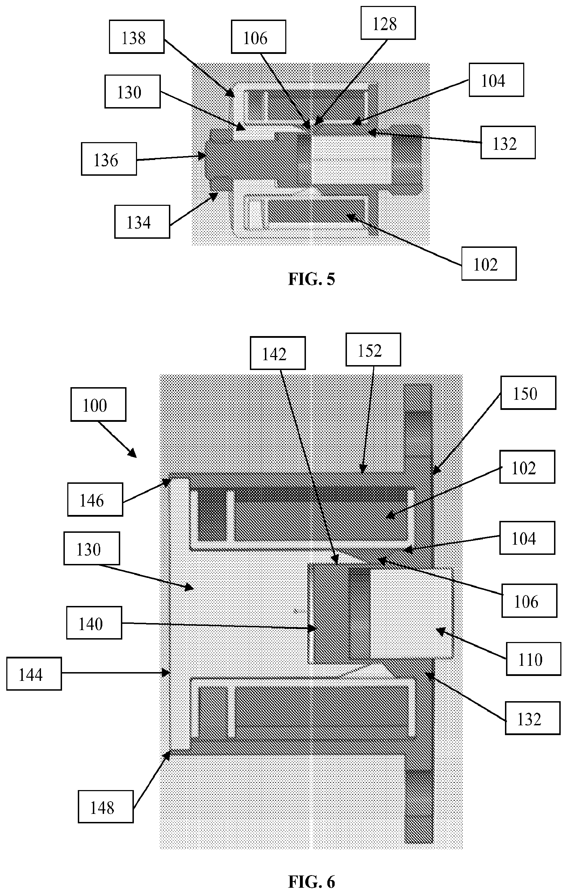

Reference is now made to FIG. 4 which illustrates yet another exemplary embodiment of the present disclosure as claimed. Shown in FIG. 4 is core tube 104 having a first portion 130 and a second portion 132. The first portion 130 is welded to the second portion 132 such that the two portions are welded together along the radial interior surface of first portion 130 and the radial exterior surface of second portion 132. In this embodiment, channel 106 is defined along the radial exterior surface of core tube 104 between first portion 130 and second portion 132. In the embodiment shown in FIG. 4, channel 106 is an air gap. It should be appreciated that in this embodiment, the radial interior surface of core tube 104 is a uniform surface that does not include any welded sections. In an alternative embodiment illustrated in FIG. 5, core tube 104 includes a first portion 130 welded to a second portion 132 such that channel 106 is formed along the radial exterior surface of core tube 104. In this embodiment, channel 106 is filled with a non-ferromagnetic filler material such that the non-ferromagnetic filler material is welded to both the first portion 130 and the second portion 132. The first portion 130 and the second portion 132 in combination with one another define or form the pole face of solenoid assembly 100. It should be appreciated that in some embodiments the first portion 130 illustrated in FIG. 5 and the second portion 132 are not maintained in place with respect to one another by a weld located along the inner radial surface of first portion 130 and the outer radial surface of second portion 132. Rather, the first portion 130 and the second portion 132 are maintained in place with respect to one another by a nut, bolt or screw 134. Nut 134 is operable to screw onto the longitudinal end 136 of second portion 132 and apply pressure on the longitudinal end 138 of the first portion 130 to maintain the location of the first portion 130 and the second portion 132 with respect to one another.

Referring to FIG. 6, shown is another exemplary embodiment of the present disclosure. as claimed. Shown in FIG. 6 is solenoid assembly 100 having a core tube 104 comprised of a first portion 130 and a second portion 132. The first portion 130 abuts an end portion 140 of the second portion 132 and circumscribes a portion of the outer radial surface 142 of the second portion 132. First portion 130 extends from the end portion 140 to end 144. End 144 along its radial edge 146 abuts and is adjacent to the outer most radial edge 148 of second portion 132. Embodiments of core tube 104 as depicted in FIG. 6 include radial edge 146 being welded to outer most radial edge 148. Embodiments also include the location of second portion 132 and first portion 130 with respect to one another being maintained by a crimp or stake located along the outer most radial edge 148 and radial edge 146. Second portion 132 includes longitudinal edge 150 along the longitudinal end of second portion 132 and outer radial surface 152 extending between longitudinal edge 150 and radial edge 146 of first portion 130. It should be appreciated that in this embodiment, second portion 132 can be made through forging, machining, powdered metal, metal 3-D printing, or additive manufacturing.

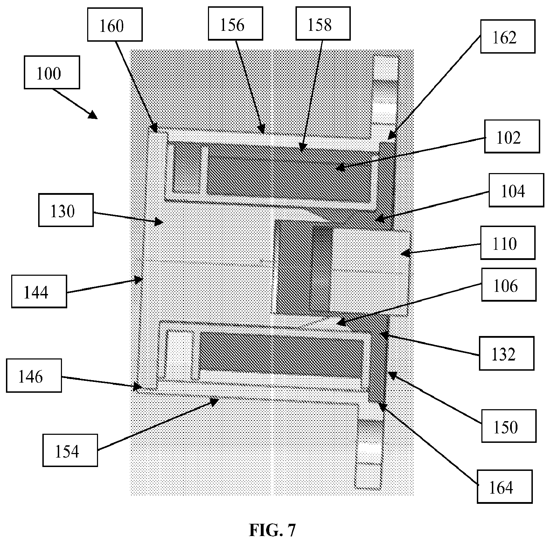

Reference is now made to FIG. 7 which illustrates a further alternative exemplary device suitable for use in practicing exemplary embodiments of this disclosure. Shown in FIG. 7 is solenoid assembly 100 having a core tube 104, which includes a first portion 130 and a second portion 132. First portion 130 includes end 144 which extends radially outward to radial outer shell 154. Radial outer shell 154 includes a radial exterior surface 156 and a radial interior surface 158 that surrounds the radial exterior side of wound coil 102. Radial outer shell 154 includes a radial cutout 160 along the radial inner surface of a longitudinal end that abuts and circumscribes radial edge 146 of end 144. Radial outer shell 154 also includes a radial cutout 162 along the radial inner surface of the other longitudinal end that abuts and circumscribes radial edge 164 of end 150 of second portion 132. Embodiments include radial outer shell 154 being welded to first portion 130 between radial edge 146 and radial cutout 160 and being welded to second portion 132 between radial edge 164 and radial cut out 162. It should be appreciated that in this embodiment, first second 130 and/or second portion 132 can be made through forging, machining, powdered metal, metal 3-D printing, or additive manufacturing.

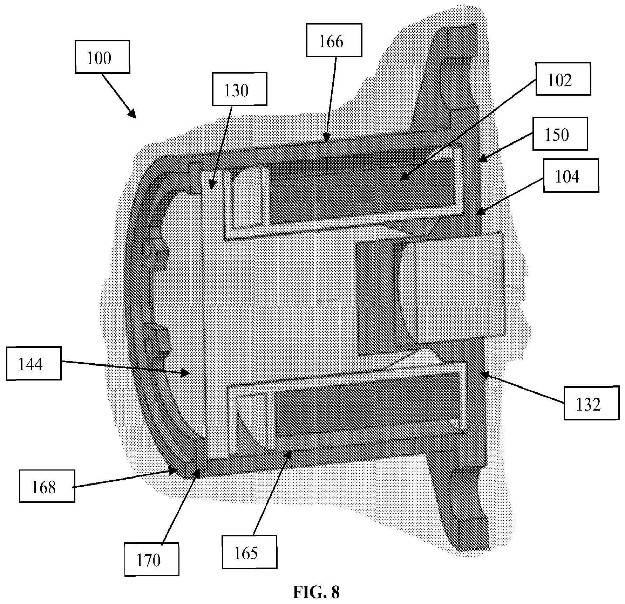

Referring to FIG. 8, shown is a perspective cross-sectional view of another alternative exemplary device suitable for use in practicing exemplary embodiments of this disclosure. Shown in FIG. 8 is a solenoid assembly 100 having a first portion 130 and a second portion 132. In this embodiment, second portion 132 includes an outer radial portion 166 that surrounds the wound coil 102 and extend between the end 150 of second portion 132 and end 144 of first portion 130. Adjacent or spaced from the longitudinal edge 168 is channel 170 which circumscribes the inner radial surface 165 of outer radial portion 166 of second portion 132. Located within channel 170 is a removeable friction fit snap ring 172. Snap ring 172 is operable to maintain a location of first portion 130 with respect to second portion 132. Channel 170 is positioned along the inner radial surface 165 of outer radial portion 166 does not overlap with first portion 130. Rather, channel 170 is positioned such that when snap ring 172 is located within channel 170, it provides sufficient pressure to maintain the location of first portion 130 with respect to second portion 132. Embodiments include the use of a ring stake in place of snap ring 172.

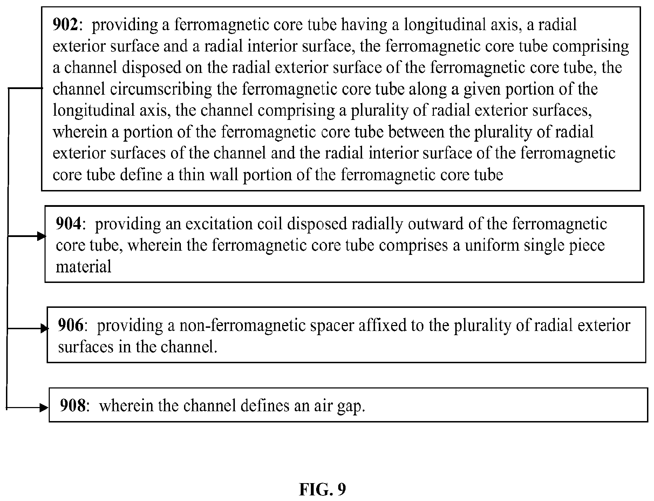

Referring now to FIG. 9, shown is an exemplary logic flow diagram in accordance with an exemplary method or process or the present disclosure. The process begins at block 902 which states providing a ferromagnetic core tube having a longitudinal axis, a radial exterior surface and a radial interior surface, the ferromagnetic core tube comprising a channel disposed on the radial exterior surface of the ferromagnetic core tube, the channel circumscribing the ferromagnetic core tube along a given portion of the longitudinal axis, the channel comprising a plurality of radial exterior surfaces, wherein a portion of the ferromagnetic core tube between the plurality of radial exterior surfaces of the channel and the radial interior surface of the ferromagnetic core tube define a thin wall portion of the ferromagnetic core tube. Next at block 904 it states providing an excitation coil disposed radially outward of the ferromagnetic core tube, wherein the ferromagnetic core tube comprises a uniform single piece material. Block 906 then indicates providing a non-ferromagnetic spacer affixed to the plurality of radial exterior surfaces in the channel. Finally, block 908 recites wherein the channel defines an air gap. The logic flow diagram may be considered to illustrate the operation of a method including the process for providing exemplary embodiments of this disclosure.

Embodiments of the present disclosure include solenoid assemblies (as shown in FIGs. 1-5) with core tubes 104 that are (i) operable to create a directional magnetic force utilizing a reduced magnetic section in the tube to focus magnetic flux, (ii) strong enough or having sufficient structural integrity to contain the internal operating pressure and mechanical forces during assembly, and (iii) leak free. Embodiments include a strong weld filler material located between the core tube 104 and the non-ferromagnetic filler material 126 is required because the wall strength of the core tube 104 needs to be able to withstand high internal gas and/or fluid pressures. The types of weld material used in embodiments of this disclosure require more heat than a typical weld and due to the process parameters associated with the welding process. High temperature welding can cause the core tube to have increased porosity, which can lead to leaks.

Embodiments of the present disclosure provide a core tube 104 having strong exterior welds that create magnetic separation of the core tube 104 material sections along with the elimination of leak paths from the radial interior surface 112 to the radial exterior surface 114 of the core tube 104. Embodiments provide a core tube 104 that includes a thin or reduced thickness area (radially inward from channel 106) located along a particular portion of the longitudinal axis of the core tube's base material. Embodiments provide a supporting weld material that is isolated from the pneumatic or hydraulic fluid that is enclosed in the interior of the core tube 104 and is controlled in the valve because the radial interior surface 112 does not include any welds, but is a uniform surface. Embodiments provide that the portions that are welded are stronger than traditional welded core tubes because the welded portion of the core tube 104 is welded along three surfaces (e.g., 120, 122, 124).

Embodiments of the present disclosure provide a core tube 104 having a hybrid tube design (see FIGs. 3 and 5) that allows for a wide range of options to accommodate for different strength and magnetic force requirements. Embodiments include core tube 104 having a single groove or channel 106 located on the radially exterior surface of the core tube that can be produced with a desired wall thickness. The groove or channel 106 can be welded to non-magnetic filler material 126 for additional strength, or it can remain open or unfilled as in FIG. 2. Indeed, embodiments include the groove or channel 106 being partially filled or fully filled with non-magnetic weld material.

Embodiments of the welding process include utilizing an electrical current to melt and/or bond the core tube 104 base metal to the filler material 126 together. Embodiments of the types of welding can include, but are not limited to, metal inert gas (MIG), metal active gas (MAG), and tungsten inert gas (TIG) electrical current welding.

One of the advantages of leaving a thin layer of core tube 104 material in the groove or channel 106 (or inner diameter) of the core tube 104 is to aid in the elimination of leaks without sacrificing the strength of the magnetic forces created by the solenoid 100.

The groove, channel, or thin layer 106 of core tube 104 is operable to create a barrier between the fluids within the core tube 104, which improves the chemical resistance along the radial interior surface 112 of the core tube 104. This is due to the fact that some weld materials can interact with the fluids within the core tube 104. In other words, embodiments of the core tube 104 are made of a non-reactive base material that isolates the welded portion of the core tube 104 from contact with the internal fluids.

Embodiments are operable for many applications. Embodiments allow for thin or thick radial walls based on the desired magnetic forces required, the pressures the core tube 104 needs to be able to withstand, and strength of the core tube 104.

Embodiments include a solenoid having a core tube 104 with a groove 106 having a thin radial core tube wall with no welded material therein for the instance that the core tube 104 only needs to be able to withstand low pressure internal pressures, and has the ability to create high magnetic forces.

As pressures increase, the groove or thin walled portion 106 of the core tube 104 can be increased, which can cause a reduction in the magnetic forces. In instances in which higher magnetic strength is required, the groove or thin walled portion 106 of the core tube 104 can be filled or partially filled with non-magnetic weld material 126. This will provide greater structural strength of the core tube 104 such that it can withstand radial, axial or torsional forces.

It is to be understood that any feature described in relation to any one embodiment may be used alone, or in combination with other features described, and may also be used alone, or in combination with one or more features of any other of the embodiments, or any combination of any other of the embodiments. The presently disclosed embodiments are therefore considered in all respects to be illustrative. The scope of the invention is defined in the accompanying claims.

## Claims

1. A solenoid assembly (100), comprising:
a ferromagnetic core tube (104) having a longitudinal axis (116), and comprising a plurality of radial exterior surfaces (114, 120, 122, 124) and a channel (106), the channel (106) circumscribing the ferromagnetic core tube (104) along a given portion of the longitudinal axis (116); and
an excitation coil (102) disposed radially outward of the ferromagnetic core tube (104) and operable to have a current passed through it to create a magnetic flux;
wherein the ferromagnetic core tube (104) comprises a first tube portion (130) and a second tube portion (132) and a cavity configured to receive an armature (110);
wherein the first tube portion (130) has a first radial interior surface and an axial end part (136, 144), the second tube portion (132) has a second radial exterior surface (142) and an axial end portion (140); wherein the first radial interior surface of the first tube portion (130) is affixed to the second radial exterior surface of the second tube portion (132); wherein the first tube portion (130) abuts the axial end portion (140) of the second tube portion (132) and circumscribes a portion of the second radial exterior surface (142) of the second tube portion (132), and wherein the first tube portion (130) extends from the axial end portion (140) of the second tube portion to the axial end part (136,144) of the first tube portion (132), the first tube portion (130) and the second tube portion (132) in combination with one another define a pole face (111) of the solenoid assembly (100) within the cavity of the core tube (104); and
wherein the channel (106) is disposed between the first tube portion (130) and the second tube portion (132) on the radial exterior surface (114, 120, 122, 124) of the ferromagnetic core tube (104);
and wherein
the solenoid assembly (100) comprises a non-ferromagnetic filler material (126) affixed to the plurality of radial exterior surfaces (114, 120, 122, 124) in the channel (106).

2. The solenoid assembly (100) according to claim 1, wherein the non-ferromagnetic filler material (126) fills the channel (106) such that a radial exterior surface (128) of the non-ferromagnetic filler material (126) is coextensive with the radial exterior surface (114) of the ferromagnetic core tube (104).

3. The solenoid assembly (100) according to claim 1, wherein the non-ferromagnetic filler material (126) fills the channel (106) such that a radial exterior surface (128) of the non-ferromagnetic filler material (126) either extends further in the radial direction than the radial exterior surface (114) of the ferromagnetic core tube (104) or does not extend in the radial direction as far as the radial exterior surface (114) of the ferromagnetic core tube (104).

4. The solenoid assembly (100) according to any one of claims 1 to 3, wherein a location the first tube portion (130) and the second tube portion (132) with respect to one another is maintained by a nut (134) removeably affixed to the end part (136) of the first portion (130).

5. The solenoid assembly (100) according to any one of claims 1 to 3, wherein a location of the first tube portion (130) and the second tube portion (132) with respect to one another is maintained by
(i) a face weld between the first tube portion (130) and the second tube portion (132),
(ii) crimping the first tube portion (130) to the second tube portion (132),
(iii) staking the first tube portion (130) to the second tube portion (132), or
(iv) a snap ring (172) removeably affixed to the second tube portion (132)

6. The solenoid assembly (100) according to any one of claims 1 to 5, wherein the first tube portion (130) and/or the second tube portion (132) is made through forging, machining, powdered metal, metal 3-D printing, or additive manufacturing.

7. A method of forming a solenoid assembly (100) according to any one of claims 1 to 6, the method comprising:
(a) providing a ferromagnetic core tube (104) according to claim 1, wherein the first tube portion (130) and the second tube portion (132) in combination with one another define a pole face of the solenoid assembly (100); and
(b) providing an excitation coil (102) disposed radially outward of the ferromagnetic core tube (104) and operable to have a current passed through it to create a magnetic flux.

8. The method according to claim 7, wherein the non-ferromagnetic filler material (126) is provided to fill the channel (106) such that a radial exterior surface (128) of the non-ferromagnetic filler material (126) is coextensive with the radial exterior surface (114) of the ferromagnetic core tube (104).

9. The method according to claim 7, wherein the non-ferromagnetic filler material (126) is provided to fill the channel (106) such that a radial exterior surface (128) of the non-ferromagnetic filler material (126) either extends further in the radial direction than the radial exterior surface (114) of the ferromagnetic core tube (104) or does not extend in the radial direction as far as the radial exterior surface (114) of the ferromagnetic core tube (104).

10. The method according to any one of claims 7 to 9, wherein a location of the first tube portion (130) and the second tube portion (132) with respect to one another is maintained by a nut (134) removeably affixed to an end part of the first portion (130).

11. The method according to any one of claims 7 to 9, wherein a location the first tube portion (130) and the second tube portion (132) with respect to one another is maintained by
(i) a face weld between the first tube portion (130) and the second tube portion (132),
(ii) crimping the first tube portion (130) to the second tube portion (132),
(iii) staking the first tube portion (130) to the second tube portion (132), or
(iv) a snap ring (172) removeably affixed to the second tube portion (132)

12. The method according to any one of claims 7 to 11, wherein the first tube portion (130) and/or the second tube portion (132) is made through forging, machining, powdered metal, metal 3-D printing, or additive manufacturing.

## Patentansprüche

1. Magnetspulenanordnung (100), umfassend:
ein ferromagnetisches Kernrohr (104) 1, das eine Längsachse (116) aufweist und eine Vielzahl von radialen Außenflächen (114, 120, 122, 124) und einen Kanal (106) umfasst, wobei der Kanal (106) das ferromagnetische Kernrohr (104) entlang eines gegebenen Abschnitts der Längsachse (116) umschreibt; und
eine Erregerspule (102), die radial außerhalb des ferromagnetischen Kernrohrs (104) angeordnet und so betreibbar ist, dass ein Strom durch sie geleitet werden kann, um einen magnetischen Fluss zu erzeugen;
wobei das ferromagnetische Kernrohr (104) einen ersten Rohrabschnitt (130) und einen zweiten Rohrabschnitt (132) und einen Hohlraum umfasst, der konfiguriert ist, um einen Anker (110) aufzunehmen;
wobei der erste Rohrabschnitt (130) eine erste radiale Innenfläche und ein axiales Endteil (136, 144) aufweist, der zweite Rohrabschnitt (132) eine zweite radiale Außenfläche (142) und einen axialen Endabschnitt (140) aufweist;
wobei die erste radiale Innenfläche des ersten Rohrabschnitts (130) an der zweiten radialen Außenfläche des zweiten Rohrabschnitts (132) befestigt ist;
wobei der erste Rohrabschnitt (130) an dem axialen Endabschnitt (140) des zweiten Rohrabschnitts (132) anliegt und einen Abschnitt der zweiten radialen Außenfläche (142) des zweiten Rohrabschnitts (132) umschreibt, und wobei sich der erste Rohrabschnitt (130) von dem axialen Endabschnitt (140) des zweiten Rohrabschnitts (132) zu dem axialen Endteil (136, 144) des ersten Rohrabschnitts (132) erstreckt, wobei der erste Rohrabschnitt (130) und der zweite Rohrabschnitt (132) in Kombination miteinander eine Polfläche (111) der Magnetspulenanordnung (100) innerhalb des Hohlraums des Kernrohrs (104) definieren; und
wobei der Kanal (106) zwischen dem ersten Rohrabschnitt (130) und dem zweiten Rohrabschnitt (132) auf der radialen Außenfläche (114, 120, 122, 124) des ferromagnetischen Kernrohrs (104) angeordnet ist; und
wobei die Magnetspulenanordnung (100) ein nicht-ferromagnetisches Füllmaterial (126) umfasst, das an der Vielzahl von radialen Außenflächen (114, 120, 122, 124) in dem Kanal (106) befestigt ist.

2. Magnetspulenanordnung (100) nach Anspruch 1, wobei das nicht-ferromagnetische Füllmaterial (126) den Kanal (106) derart füllt, dass eine radiale Außenfläche (128) des nicht-ferromagnetischen Füllmaterials (126) flächenbündig mit der radialen Außenfläche (114) des ferromagnetischen Kernrohrs (104) ist.

3. Magnetspulenanordnung (100) nach Anspruch 1, wobei das nicht-ferromagnetische Füllmaterial (126) den Kanal (106) derart füllt, dass eine radiale Außenfläche (128) des nicht-ferromagnetischen Füllmaterials (126) entweder in der radialen Richtung weiter als die radiale Außenfläche (114) des ferromagnetischen Kernrohrs (104) vorsteht oder sich in der radialen Richtung nicht so weit wie die radiale Außenfläche (114) des ferromagnetischen Kernrohrs (104) erstreckt.

4. Magnetspulenanordnung (100) nach einem der Ansprüche 1 bis 3, wobei eine Lage des ersten Rohrabschnitts (130) und des zweiten Rohrabschnitts (132) zueinander durch eine Mutter (134) aufrechterhalten wird, die lösbar an dem Endteil (136) des ersten Abschnitts (130) befestigt ist.

5. Magnetspulenanordnung (100) nach einem der Ansprüche 1 bis 3, wobei eine Lage des ersten Rohrabschnitts (130) und des zweiten Rohrabschnitts (132) zueinander aufrechterhalten wird durch:
(i) eine Stirnschweißnaht zwischen dem ersten Rohrabschnitt (130) und dem zweiten Rohrabschnitt (132),
(ii) Crimpen des ersten Rohrabschnitts (130) an den zweiten Rohrabschnitt (132),
(iii) Verstemmen des ersten Rohrabschnitts (130) an den zweiten Rohrabschnitt (132), oder
(iv) einen Sprengring (172), der lösbar an dem zweiten Rohrabschnitt (132) befestigt ist.

6. Magnetspulenanordnung (100) nach einem der Ansprüche 1 bis 5, wobei der erste Rohrabschnitt (130) und/oder der zweite Rohrabschnitt (132) durch Schmieden, maschinelle Bearbeitung, Pulvermetall, Metall-3D-Druck oder additive Fertigung hergestellt ist.

7. Verfahren zum Bilden einer Magnetspulenanordnung (100) nach einem der Ansprüche 1 bis 6, wobei das Verfahren umfasst:
(a) Bereitstellen eines ferromagnetischen Kernrohrs (104) nach Anspruch 1, wobei der erste Rohrabschnitt (130) und der zweite Rohrabschnitt (132) in Kombination miteinander eine Polfläche der Magnetspulenanordnung (100) definieren; und
(b) Bereitstellen einer Erregerspule (102), die radial außerhalb des ferromagnetischen Kernrohrs (104) angeordnet und so betreibbar ist, dass ein Strom durch sie geleitet werden kann, um einen magnetischen Fluss zu erzeugen.

8. Verfahren nach Anspruch 7, wobei das nicht-ferromagnetische Füllmaterial (126) bereitgestellt wird, um den Kanal (106) derart zu füllen, dass eine radiale Außenfläche (128) des nicht-ferromagnetischen Füllmaterials (126) flächenbündig mit der radialen Außenfläche (114) des ferromagnetischen Kernrohrs (104) ist.

9. Verfahren nach Anspruch 7, wobei das nicht-ferromagnetische Füllmaterial (126) bereitgestellt wird, um den Kanal (106) derart zu füllen, dass eine radiale Außenfläche (128) des nicht-ferromagnetischen Füllmaterials (126) entweder in der radialen Richtung weiter als die radiale Außenfläche (114) des ferromagnetischen Kernrohrs (104) vorsteht oder sich in der radialen Richtung nicht so weit wie die radiale Außenfläche (114) des ferromagnetischen Kernrohrs (104) erstreckt.

10. Verfahren nach einem der Ansprüche 7 bis 9, wobei eine Lage des ersten Rohrabschnitts (130) und des zweiten Rohrabschnitts (132) zueinander durch eine Mutter (134) aufrechterhalten wird, die lösbar an dem Endteil des ersten Abschnitts (130) befestigt ist.

11. Verfahren nach einem der Ansprüche 7 bis 9, wobei eine Lage des ersten Rohrabschnitts (130) und des zweiten Rohrabschnitts (132) zueinander aufrechterhalten wird durch:
(i) eine Stirnschweißnaht zwischen dem ersten Rohrabschnitt (130) und dem zweiten Rohrabschnitt (132),
(ii) Crimpen des ersten Rohrabschnitts (130) an den zweiten Rohrabschnitt (132),
(iii) Verstemmen des ersten Rohrabschnitts (130) an den zweiten Rohrabschnitt (132), oder
(iv) einen Sprengring (172), der lösbar an dem zweiten Rohrabschnitt (132) befestigt ist.

12. Verfahren nach einem der Ansprüche 7 bis 11, wobei der erste Rohrabschnitt (130) und/oder der zweite Rohrabschnitt (132) durch Schmieden, maschinelle Bearbeitung, Pulvermetall, Metall-3D-Druck oder additive Fertigung hergestellt ist.

## Revendications

1. Un ensemble de solénoïde (100), comprenant :
un tube de noyau ferromagnétique (104) ayant un axe longitudinal (116), et comprenant une pluralité de surfaces extérieures radiales (114, 120, 122, 124) et un canal (106), le canal (106) circonscrivant le tube de noyau ferromagnétique (104) le long d'une portion donnée de l'axe longitudinal (116) ; et
une bobine d'excitation (102) disposée radialement vers l'extérieur du tube de noyau ferromagnétique (104) et pouvant être actionnée pour laisser passer un courant à travers elle afin de créer un flux magnétique ;
dans lequel le tube de noyau ferromagnétique (104) comprend une première portion de tube (130) et une seconde portion de tube (132) et une cavité configurée pour recevoir une armature (110) ;
dans lequel la première portion de tube (130) a une première surface intérieure radiale et une partie d'extrémité axiale (136, 144), la seconde portion de tube (132) a une seconde surface extérieure radiale (142) et une portion d'extrémité axiale (140) ;
dans lequel la première surface intérieure radiale de la première portion de tube (130) est fixée à la seconde surface extérieure radiale de la seconde portion de tube (132) ;
dans lequel la première portion de tube (130) vient en butée contre la portion d'extrémité axiale (140) de la seconde portion de tube (132) et circonscrit une portion de la seconde surface extérieure radiale (142) de la seconde portion de tube (132), et dans lequel la première portion de tube (130) s'étend depuis la portion d'extrémité axiale (140) de la seconde portion de tube (132) jusqu'à la partie d'extrémité axiale (136, 144) de la première portion de tube (132), la première portion de tube (130) et la seconde portion de tube (132), en combinaison l'une avec l'autre, définissent une face polaire (111) de l'ensemble de solénoïde (100) à l'intérieur de la cavité du tube de noyau (104) ; et
dans lequel le canal (106) est disposé entre la première portion de tube (130) et la seconde portion de tube (132) sur la surface extérieure radiale (114, 120, 122, 124) du tube de noyau ferromagnétique (104) ; et
dans lequel l'ensemble de solénoïde (100) comprend un matériau de remplissage non ferromagnétique (126) fixé à la pluralité de surfaces extérieures radiales (114, 120, 122, 124) dans le canal (106).

2. L'ensemble de solénoïde (100) selon la revendication 1, dans lequel le matériau de remplissage non ferromagnétique (126) remplit le canal (106) de telle sorte qu'une surface extérieure radiale (128) du matériau de remplissage non ferromagnétique (126) est coextensive avec la surface extérieure radiale (114) du tube de noyau ferromagnétique (104).

3. L'ensemble de solénoïde (100) selon la revendication 1, dans lequel le matériau de remplissage non ferromagnétique (126) remplit le canal (106) de telle sorte qu'une surface extérieure radiale (128) du matériau de remplissage non ferromagnétique (126) soit s'étend plus loin dans la direction radiale que la surface extérieure radiale (114) du tube de noyau ferromagnétique (104), soit ne s'étend pas dans la direction radiale aussi loin que la surface extérieure radiale (114) du tube de noyau ferromagnétique (104).

4. L'ensemble de solénoïde (100) selon l'une quelconque des revendications 1 à 3, dans lequel un emplacement de la première portion de tube (130) et de la seconde portion de tube (132) l'une par rapport à l'autre est maintenu par un écrou (134) fixé de manière amovible à la partie d'extrémité (136) de la première portion (130).

5. L'ensemble de solénoïde (100) selon l'une quelconque des revendications 1 à 3, dans lequel un emplacement de la première portion de tube (130) et de la seconde portion de tube (132) l'une par rapport à l'autre est maintenu par :
(i) une soudure frontale entre la première portion de tube (130) et la seconde portion de tube (132),
(ii) un sertissage de la première portion de tube (130) sur la seconde portion de tube (132),
(iii) un matage de la première portion de tube (130) sur la seconde portion de tube (132), ou
(iv) un anneau élastique (172) fixé de manière amovible à la seconde portion de tube (132).

6. L'ensemble de solénoïde (100) selon l'une quelconque des revendications 1 à 5, dans lequel la première portion de tube (130) et/ou la seconde portion de tube (132) est réalisée par forgeage, usinage, métallurgie des poudres, impression 3D métallique ou fabrication additive.

7. Un procédé de formation d'un ensemble de solénoïde (100) selon l'une quelconque des revendications 1 à 6, le procédé comprenant :
(a) la fourniture d'un tube de noyau ferromagnétique (104) selon la revendication 1, dans lequel la première portion de tube (130) et la seconde portion de tube (132), en combinaison l'une avec l'autre, définissent une face polaire de l'ensemble de solénoïde (100); et
(b) la fourniture d'une bobine d'excitation (102) disposée radialement vers l'extérieur du tube de noyau ferromagnétique (104) et pouvant être actionnée pour laisser passer un courant à travers elle afin de créer un flux magnétique.

8. Le procédé selon la revendication 7, dans lequel le matériau de remplissage non ferromagnétique (126) est fourni pour remplir le canal (106) de telle sorte qu'une surface extérieure radiale (128) du matériau de remplissage non ferromagnétique (126) est coextensive avec la surface extérieure radiale (114) du tube de noyau ferromagnétique (104).

9. Le procédé selon la revendication 7, dans lequel le matériau de remplissage non ferromagnétique (126) est fourni pour remplir le canal (106) de telle sorte qu'une surface extérieure radiale (128) du matériau de remplissage non ferromagnétique (126) soit s'étend plus loin dans la direction radiale que la surface extérieure radiale (114) du tube de noyau ferromagnétique (104), soit ne s'étend pas dans la direction radiale aussi loin que la surface extérieure radiale (114) du tube de noyau ferromagnétique (104).

10. Le procédé selon l'une quelconque des revendications 7 à 9, dans lequel un emplacement de la première portion de tube (130) et de la seconde portion de tube (132) l'une par rapport à l'autre est maintenu par un écrou (134) fixé de manière amovible à la partie d'extrémité de la première portion (130).

11. Le procédé selon l'une quelconque des revendications 7 à 9, dans lequel un emplacement de la première portion de tube (130) et de la seconde portion de tube (132) l'une par rapport à l'autre est maintenu par :
(i) une soudure frontale entre la première portion de tube (130) et la seconde portion de tube (132),
(ii) un sertissage de la première portion de tube (130) sur la seconde portion de tube (132),
(iii) un matage de la première portion de tube (130) sur la seconde portion de tube (132), ou
(iv) un anneau élastique (172) fixé de manière amovible à la seconde portion de tube (132).

12. Le procédé selon l'une quelconque des revendications 7 à 11, dans lequel la première portion de tube (130) et/ou la seconde portion de tube (132) est réalisée par forgeage, usinage, métallurgie des poudres, impression 3D métallique ou fabrication additive.
